# EUROPEAN PATENT SPECIFICATION

(11) **EP 3 502 653 B1**
(45) Date of publication and mention of the grant of the patent: **02.12.2020**
(21) Application number: 18753536.4
(22) Date of filing: 08.02.2018
(51) Int. Cl.: G01N 1/36, G01N 1/31

(54) **EMBEDDING DEVICE**
EINBETTUNGSVORRICHTUNG
DISPOSITIF D'INCLUSION

(30) Priority: 15.02.2017 JP 2017025798
(43) Date of publication of application: 26.06.2019
(73) Proprietor: Sakura Seiki Co., Ltd., Chikuma-shi Nagano 387-0015 (JP); Sakura Finetek Japan Co., Ltd., Tokyo 103-0023 (JP)
(72) Inventor: NAKAZAWA Yoshiaki, Chikuma-shi Nagano 387-0015 (JP)
(74) Representative: Mewburn Ellis LLP
(86) International application number: PCT/JP2018/004299
(87) International publication number: WO 2018/150986

(56) References cited:
- CN-A- 103 439 163
- JP-A- 2002 318 177
- JP-A- 2002 318 177
- JP-B2- 4 097 877
- US-A1- 2010 151 513
- US-A1- 2010 151 513
- US-A1- 2011 076 753
- US-A1- 2011 076 753
- US-B1- 6 395 234

## Description

### Technical Field

The present invention relates to an embedding apparatus, and particularly relates to an embedding apparatus embedding a sample such as a tissue piece by using an embedding material such as paraffin.

### Background Art

In order to make a microscope specimen from a tissue piece (sample) collected from a human body or the like, the collected tissue piece is dehydrated by alcohol, then, degreased by replacing alcohol with xylene by using a tissue piece treatment device, and the degreased tissue piece is embedded by being permeated by an embedding material such as paraffin. The embedded tissue piece is sliced by a microtome and the like to make a microscope specimen.

When the tissue piece embedded by the embedding material is sliced by the microtome, how to hold the soft tissue piece becomes a problem. Furthermore, it is also necessary to write data indicating when the tissue piece was collected, to whom the tissue piece belongs, from which part the tissue piece was collected and so on. Accordingly, an embedding apparatus in which the tissue piece embedded by the embedding material is integrally attached to a body of a resin cassette by the embedding material is proposed (Patent Literature 1: refer to JP-A-2002-318177) Another relevant prior art is the patent literature US 2010/151513 A1 that discloses the preamble of claim 1.

### Citation List

### Patent Literature

PTL 1: JP-A-2002-318177

### Summary of Invention

### Technical Problem

Here, a schematic process of embedding a sample by using the embedding apparatus cited in Patent Literature 1 is as follows. First, a cassette housed in a molten paraffin is taken out by holding a tweezers. Next, the tweezers are put on a holder once. Subsequently, a lid of the cassette is opened with one hand while a body of the cassette is held with the other hand. Next, the tissue piece in the cassette is put on an embedding tray by holding the tweezers again to be positioned on a cold spot. Then, the embedding tray is covered with the body of the cassette and the molten paraffin is dispensed over the cassette. The embedding process of the sample is performed in this manner.

The process of embedding the sample is schematically performed as described above. In particular, there is a disadvantage that it is necessary to return the tweezers held with the hand to the holder every time as the process of opening the lid of the cassette is performed with both hands. This causes complication of work and increase in work time, which requires improvement.

The present invention has been accomplished in view of the above problem, and an object thereof is to provide an embedding apparatus capable of opening a lid of a cassette used for accommodating a sample and the like with one hand.

### Solution to Problem

The above problem will be solved by a solution disclosed below.

An embedding apparatus includes a placement mechanism for placing a cassette having a body and a lid provided so as to be opened and closed with respect to the body for accommodating a sample and a lid opening mechanism for opening the lid of the cassette, in which the lid opening mechanism includes a one end part provided at a position lower in height than a lower surface of the lid and an inclined surface extending from the one end part to a position higher in height than the lower surface of the lid in a state where the cassette with the lid closed is placed on a predetermined position of the placement mechanism.

### Advantageous Effects of Invention

According to the present invention, it is possible to realize the embedding apparatus capable of performing a process of opening the lid of the cassette used for accommodating a sample or the like with one hand. Accordingly, work can be simplified and work time can be reduced.

### Brief Description of Drawings

Fig. 1 is a plan view (schematic view) showing an example of an embedding apparatus according to an example not falling under the scope of the claimed invention
Fig. 2 is a side view (schematic view) of the embedding apparatus shown in Fig. 1;
Fig. 3 is a perspective view (schematic view) showing a cassette accommodating a sample embedded by the embedding apparatus shown in Fig. 1;
Fig. 4 is a perspective view (schematic view) for explaining a structure of a body and a lid in the cassette shown in Fig. 3;
Fig. 5 is a perspective view (schematic view) showing an example of a lid opening mechanism of the embedding apparatus shown in Fig. 1;
Fig. 6 is a cross-sectional view taken along VI-VI line in Fig. 5;
Fig. 7 is a perspective view (schematic view) showing an example of a lid opening mechanism of an embedding apparatus according to the present invention;
Fig. 8 is a cross-sectional view taken along VIII-VIII line in Fig. 7;
Fig. 9 is a perspective view (schematic view) showing an example of a lid opening mechanism of an embedding apparatus according to an embodiment of the present invention; and
Fig. 10 is a plan view (schematic view) showing an example of a lid opening mechanism and a placement mechanism of an embedding apparatus according to another embodiment of the present invention.

### Description of Embodiments

### First example not falling under the scope of the claimed invention.

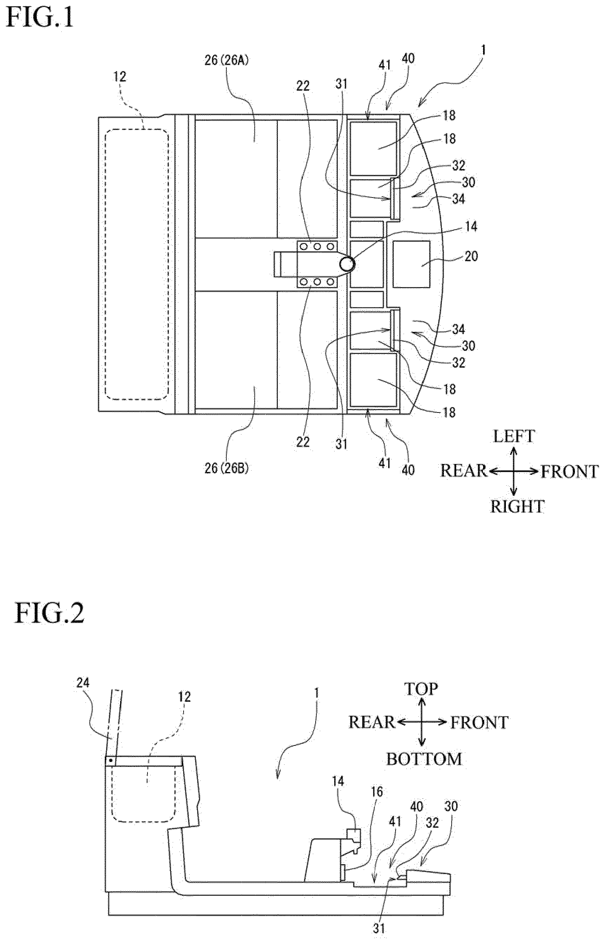

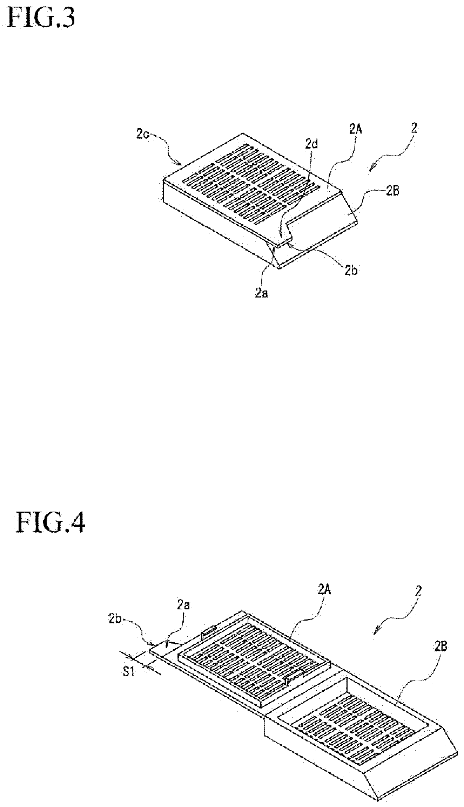

Hereinafter, a first example not falling under the scope of the claimed invention will be explained in detail with reference to the drawings. Fig. 1 is a plan view (schematic view) showing an example of an embedding apparatus 1 according to the first example not falling under the scope of the claimed invention and Fig. 2 is a side view (schematic view) thereof. Fig. 3 is a perspective view (schematic view) of a cassette that accommodates a sample embedded by the embedding apparatus 1, and Fig. 4 is a perspective view (schematic view) showing a state in which a lid provided so as to be opened and closed with respect to a body of the cassette is opened. In the drawings, front/back, right/left and top/bottom directions of the embedding apparatus 1 are shown by arrows for convenience of explanation. In all drawings for explaining respective embodiments, the same signs are given to members having the same functions and repeated explanation thereof may be omitted.

As shown in Fig. 1 and Fig. 2, the embedding apparatus 1 according to the example not falling under the scope of the claimed invention includes a storage tank 12 storing molten paraffin as an embedding material, a needle valve 14 as a flow regulating valve installed below a liquid level of the molten paraffin stored in the storage tank 12 and an opening/closing switch 16 of an opening/closing valve provided in the middle of a pipe connecting the storage tank 12 and the needle valve 14. A cover 24 is attached above the storage tank 12 so as to be opened and closed. It is possible to supply paraffin and so on to the storage tank 12 by opening the cover 24.

Moreover, a hot plate 18 for heating an embedding tray and the like in which the sample is accommodated is provided in front of the needle valve 14 in the right/left direction. On the other hand, a holder 22 for heating instruments such as tweezers used when taking out the sample from a cassette 2 or other cases is provided behind and close to the needle valve 14 in the right/left direction.

Furthermore, a cold spot 20 cooled by a Peltier element is provided in front of the needle valve 14. The cold spot 20 is used when solidifying the molten paraffin filled in the embedding tray that accommodates the sample.

On the other hand, heating tanks 26 housing and heating the embedding tray and the sample are provided behind the needle valve 14 in the right/left direction.

Also in the embedding apparatus 1 according to the example not falling under the scope of the claimed invention a placement mechanism 40 on which the cassette 2 is placed is provided. Here, the placement mechanism 40 is provided with a groove portion 41 formed to have a width in the front/rear direction which is wider than a width in the front/rear direction of the cassette 2 so that the cassette 2 is fitted and can move in the right/left direction, in which a top surface of the hot plate 18 is exposed in the groove portion 41. Therefore, the cassette 2 is placed on the top surface of the hot plate 18. It is also preferable to have a structure in which a flat plate not having a heating mechanism is arranged instead of the hot plate 18 as a modification example (not shown).

According to the structure, it is possible to prevent the embedding tray from falling off to the outside of the apparatus and to place the embedding tray reliably on a predetermined position of the apparatus (on the hot plate 18 inside the groove portion 41 in this case) due to existence of the groove portion 41.

The embedding apparatus 1 according to the example not falling under the scope of the claimed invention has a structure in which respective mechanisms are arranged symmetrically with respect to the needle valve 14 so that the work can be performed regardless of a worker's dominant hand (a right-handed and left-handed worker).

Here, a process of embedding a sample (tissue piece) using the embedding apparatus 1 will be explained.

First, a sample accommodated in the cassette 2 after permeation of paraffin is housed with a basket in the heating tank 26 storing the molten paraffin.

Next, the cassette 2 with the sample housed inside the molten paraffin in the heating tank 26 (26A as an example) by holding the tweezers. Here, the size of the sample is checked by opening a lid 2A of the cassette 2.

Next, the embedding tray corresponding to the size of the sample which has been previously heated is taken out from the heating tank 26 (26B as an example), and a small amount of paraffin is dispensed into the embedding tray from the needle valve 14.

Next, the sample in the cassette 2 is put into the embedding tray by using the tweezers and the position of the sample is fixed while cooling the embedding tray on the cold spot 20.

Next, an opening of the embedding tray is covered with a body 2B of the cassette 2 in a state where the lid 2A is opened, and the molten paraffin is dispensed over the body 2B of the cassette 2.

Next, the embedding tray is cooled by using another apparatus (as an example, a cryomodule (not shown) or the like) to solidify paraffin.

Next, when the paraffin is solidified by cooling, the body 2B of the cassette 2 is removed from the embedding tray. At this time, the sample is fixed in the body 2B of the cassette 2 in a state of being embedded by the paraffin.

The embedding of the sample is performed by the above schematic process. Subsequently, a process in which the sample is sliced by using a microtome (not shown) to fabricate a microscope specimen and so on are performed.

Incidentally, there is a problem in a related-art embedding process as described above that, when opening the lid 2A of the cassette 2 accommodating the sample, it is necessary to return the tweezers which have been held with the hand to the holder 22 once and open the lid 2A of the cassette 2 with one hand while holding the body 2B of the cassette 2 with the other hand.

The above problem is solved by providing the following characteristic structure.

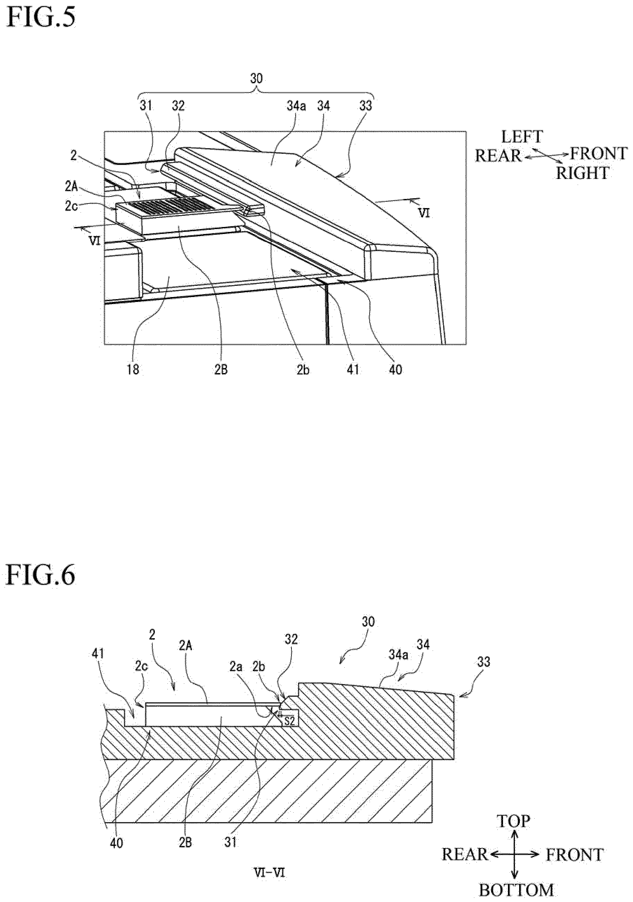

Specifically, there is provided a structure having a lid opening mechanism 30 including a one end part 31 provided at a position lower in height in the top/bottom direction than a lower surface 2a of the lid 2A provided so as to be opened and closed with respect to the body 2B of the cassette 2 that accommodates the sample and an inclined surface 32 extending from the one end part 31 to a position higher in height in the top/bottom direction than the lower surface 2a of the lid 2A in a state where the cassette 2 is placed on a predetermined portion (a predetermined position on a top surface of the hot plate 18 arranged inside the groove portion 41 as an example) of the placement mechanism 40. Here, a perspective view (schematic view) of the lid opening mechanism 30 is shown in Fig. 5 and a cross-sectional view taken along VI-VI line in Fig. 5 is shown in Fig. 6.

As an example, the lid opening mechanism 30 is formed of a resin material. However, the material is not limited to this, and a structure formed of a metal material may be adopted. In that case, a structure in which the one end part 31 and the inclined surface 32 can be heated is adopted, thereby obtaining an operation that paraffin adhered to these parts is melted and falls off, which eliminates necessity of clearing, therefore, workability can be further improved.

The inclined surface 32 according to the example not falling under the scope of the claimed invention is configured to be inclined in a direction parallel to a direction facing the cassette, namely, in the front/rear direction shown by an arrow in the drawing. Also, the one end part 31 is formed, as an example, so that a cross-sectional shape (cross-sectional shape of a surface orthogonal to the right/left direction) of a distal end is an approximately V-shape, namely, a tapered shape with an acute angle (see Fig. 6).

According to the above structure, when a front end 2b of the lid 2A of the cassette 2 is allowed to abut on the inclined surface 32 of the lid opening mechanism 30 and a motion of pulling the cassette 2 to the front direction from that state is performed, an operation that the front end 2b of the lid 2A rises along the inclined surface 32 and the lid 2A is opened can be obtained.

In order to obtain the above operation, it is preferable that the inclined surface 32 is formed so that a horizontal distance S2 from the one end part 31 to a position where a height becomes the same as a height of the lower surface 2a of the lid 2A is shorter than a protruding distance S1 from the body 2B in the lid 2A.

As described above, when adopting the embedding apparatus 1 according to the example not falling under the scope of the claimed invention the lid 2A can be opened only by moving the cassette 2 so as to be pulled in the front direction with one hand while holding the tweezers with the other hand. Accordingly, the lid 2A of the cassette 2 can be opened with one hand without returning the tweezers held with the hand to the holder 22 every time, therefore, work can be simplified and work time can be reduced as compared with the related-art apparatus.

The embedding apparatus 1 according to the example not falling under the scope of the claimed invention is configured to include a hand-rest part 34 with an upper surface part 34a having a predetermined size in the front/rear direction and in the right/left direction in an area continued from the other end part 33 (an end part on the opposite side of the one end part 31 in the front/rear direction), namely, an area having a predetermined width from the other end part 33 to the one end part 31 direction in the lid opening mechanism 30.

As the hand used when opening the lid 2A of the cassette 2 (a portion around a palm to a wrist) can be put on the hand-rest part 34 according to the above structure, a motion of pulling the cassette 2 to the front direction while putting fingertips on a rear end 2c of the cassette 2 can be performed with a comfortable posture and without displacement.

### The Invention

Next, the embedding apparatus 1 according to the present invention will be explained. The fundamental structure of the embedding apparatus 1 according to the embodiment is the same as that of the above first example not falling under the scope of the claimed invention but there is a different point particularly in the structure of the lid opening mechanism 30. Hereinafter, the present embodiment will be explained with a focus on the different point.

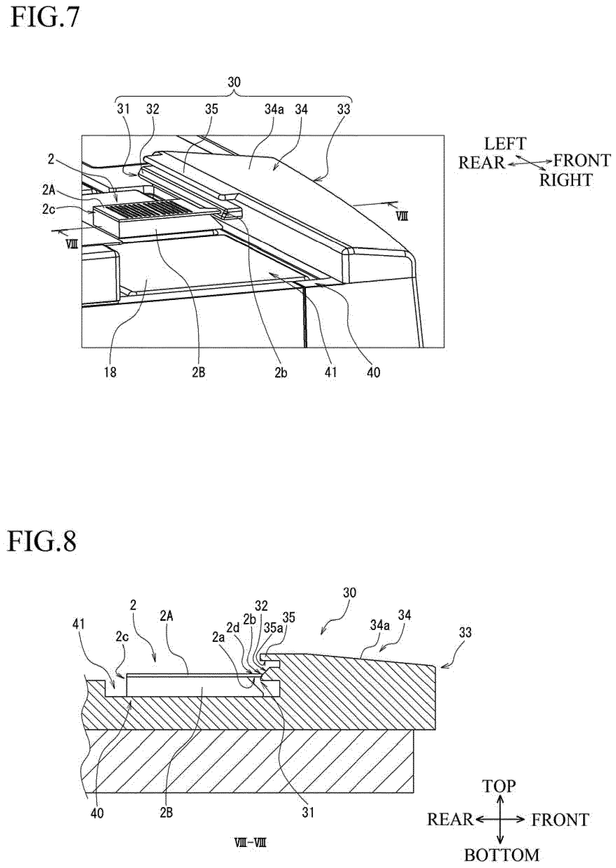

A perspective view (schematic view) of the lid opening mechanism 30 of the embedding apparatus 1 according to the embodiment is shown in Fig. 7 and a cross-sectional view taken along VIII-VIII line in Fig. 7 is shown in Fig. 8.

In the embedding apparatus 1 according to the embodiment, the lid opening mechanism 30 is provided with a jump preventing part 35 formed in an eaves shape in an upper position close to a part where the lower surface 2a of the lid 2A corresponds to a height in the top/bottom direction of the inclined surface 32 in the lid opening mechanism 30.

According to the structure, when the front end 2b of the lid 2A of the cassette 2 is allowed to abut on the inclined surface 32 of the lid opening mechanism 30 and the motion of pulling the cassette 2 to the front direction from that state is performed, the operation that the front end 2b of the lid 2A rises along the inclined surface 32 and the lid 2A is opened can be obtained, which is the same as the above example not falling under the scope of the claimed invention.

Here, when the lid 2A is opened in the above operation, the lid 2A may jump up due to the force of opening. However, when the structure having the jump preventing part 35 according to the embodiment is adopted, an operation in which an upper surface 2d of the lid 2A abuts on a lower surface 35a of the jump preventing part 35 having eaves shape when the lid 2A jumps up to thereby suppress jumping can be obtained. Therefore, the jumping of the lid 2A which can occur as a problem generated only when opening the lid 2A with one hand can be prevented as well as scattering of the sample or the like caused by the jumping of the lid 2A can be also prevented.

### (Example not falling under the scope of the claimed invention)

Subsequently, the embedding apparatus 1 according to another example not falling under the scope of the claimed invention will be explained. The fundamental structure of the embedding apparatus 1 according to the example not falling under the scope of the claimed invention is the same as that of the first example not falling under the scope of the claimed invention but there is a different point particularly in the structure of the lid opening mechanism 30. Hereinafter, the present embodiment will be explained with a focus on the different point.

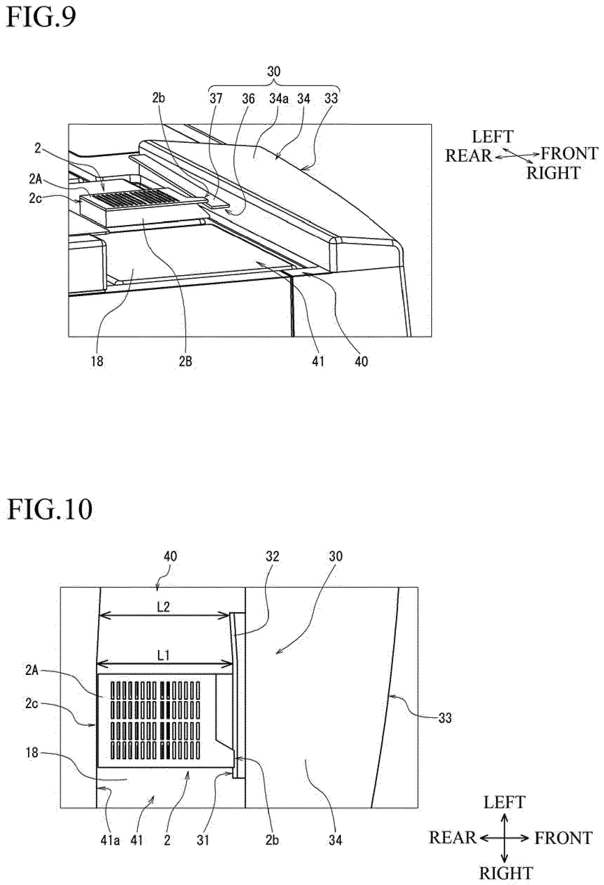

A perspective view (schematic view) of the lid opening mechanism 30 of the embedding apparatus 1 according to this example not falling under the scope of the claimed invention is shown in Fig. 9.

As a characteristic structure of the embedding apparatus 1 according to this example not falling under the scope of the claimed invention, an inclined surface 37 in the lid opening mechanism 30 is provided so that a one end part 36 is formed at a position lower in height than the lower surface 2a of the lid 2A of the cassette 2 and is inclined in a direction orthogonal to the direction facing the cassette 2, namely, in the right/left direction shown by the arrow in the drawing (in the exemplification of Fig. 9, a right end is lower than a left end) in a state where the cassette 2 is placed on a predetermined position of the placement mechanism 40 (specifically, a predetermined position on the top surface of the hot plate 18 arranged in the groove portion 41 as an example).

According to the structure, when the cassette 2 is placed on the placement mechanism 40 (on the top surface of the hot plate 18 arranged inside the groove portion 41 in this case) so that the front end 2b of the lid 2A of the cassette 2 is in a position overlapping with the inclined surface 37 in plan view and so that the lower surface 2a of the lid 2A is in an upper position of the inclined surface 37, and further, a motion of sliding the cassette 2 to move in a right or left predetermined direction in which the inclined surface 37 is inclined upward (a left direction in the exemplification of Fig. 9) from that state is performed, thereby obtaining the operation that the front end 2b of the lid 2A rises along the inclined surface 37 and the lid 2A is opened.

As described above, when adopting the embedding apparatus 1 according to the example not falling under the scope of the claimed invention the lid 2A can be opened only by sliding the cassette 2 to move in a right or left predetermined direction with one hand while holding the tweezers with the other hand.

It is possible to adopt a structure as a modification example in which the jump preventing part formed in the eaves shape is provided in an upper position close to a part where the lower surface 2a of the lid 2A corresponds to a height in the top/bottom direction of the inclined surface 37 in the same manner as the claimed invention (not shown).

### (Another example not falling under the scope of the claimed invention)

Subsequently, the embedding apparatus 1 according to another example not falling under the scope of the claimed invention will be explained. The fundamental structure of the embedding apparatus 1 according to this example not falling under the scope of the claimed invention is the same as that of the first example not falling under the scope of the claimed invention, but there are different points particularly in structures of the lid opening mechanism 30 and the placement mechanism 40. Hereinafter, the present example not falling under the scope of the claimed invention will be explained with a focus on the different points.

A plan view (schematic view) of the lid opening mechanism 30 and the placement mechanism 40 in the embedding apparatus 1 according to the example not falling under the scope of the claimed invention is shown in Fig. 10.

The embedding apparatus 1 according to the embodiment has a structure in which a distance between a wall surface 41a on a side separated from the one end part 31 in the groove portion 41 and the one end part 31 is reduced toward a right or left predetermined direction concerning both or any of the lid opening mechanism 30 and the placement mechanism 40. That is, referring to Fig. 10, the distance between the wall surface 41a on the side separated from the one end part 31 in the groove portion 41 and the one end part 31 is reduced from L1 to L2 from the right side toward the left side.

In the example not falling under the scope of the claimed invention the one end part 31 of the lid opening mechanism 30 is bent/curved to be close to the wall surface 41a on the side separated from the one end part 31 in the groove portion 41 toward a right or left predetermined direction, as well as the wall surface 41a on the side separated from the one end part 31 in the groove portion 41 of the placement mechanism 40 is bent/curved to be close to the one end part 31 of the lid opening mechanism 30.

As another example, it is preferable to adopt a structure in which the one end portion 31 of the lid opening mechanism 30 alone is bent/curved to be close to the wall surface 41a on the side separated from the one end part 31 in the groove portion 41 toward a right or left predetermined direction (not shown).

As further another example, it is preferable to adopt a structure in which the wall surface 41a on the side separated from the one end part 31 in the groove portion 41 of the placement mechanism 40 alone is bent/curved to be close to the one end part 31 of the lid opening mechanism 30 (not shown).

Also according to any of the structure examples, when the cassette 2 is placed on the placement mechanism 40 (the upper surface of the hot plate 18 arranged inside the groove portion 41 in this case) so that the front end 2b of the lid 2A of the cassette 2 is in the position overlapping with the inclined surface 32 in plan view and so that the lower surface 2a of the lid 2A is in an upper position of the inclined surface 32, and further, when a motion of sliding the cassette 2 to move in a direction in which the distance between the wall surface on the side separated from the one end part 31 in the groove portion 41 and the one end part 31 is reduced (a left direction in the exemplification of Fig. 10) from that state is performed, a position where the front end 2b of the lid 2A of the cassette 2 abuts on the inclined surface 32 of the lid opening mechanism 30 is gradually changed, more specifically, the abutting position is changed from a lower position of the inclined surface 32 to an upper position thereof, therefore, an operation that the front end 2b of the lid 2A rises along the inclined surface 32 and the lid 2A is opened can be obtained.

As described above, when adopting the embedding apparatus 1 according to the example not falling under the scope of the claimed invention, the lid 2A can be opened only by sliding the cassette 2 to move in a right or left predetermined direction with one hand while holding the tweezers with the other hand.

It is then adopted a structure as a modification example in which the jump preventing part formed in the eaves shape is provided in the upper position close to the part where the lower surface 2a of the lid 2A corresponds to the height in the top/bottom direction of the inclined surface 32 in the same manner as the claimed invention (not shown).

As described above, the lid of the cassette can be opened only by moving the cassette in a predetermined direction with one hand while holding the tweezers with the other hand when adopting the embedding apparatus according to the present invention. Therefore, the lid of the cassette can be opened with one hand without returning the tweezers held with the hand to the holder every time, which can simplify work and reduce work time as compared with the related-art apparatus.

## Claims

1. An embedding apparatus (1) comprising:
a placement mechanism (40) for placing a cassette (2) used for accommodating a tissue sample, the cassette having a body (2B) and a lid (2A) provided so as to be opened and closed with respect to the body for accommodating a sample; and
a lid opening mechanism (30) for opening the lid of the cassette,
wherein the lid opening mechanism includes a one end part (31) provided at a position lower in height than a lower surface (2a) of the lid and an inclined surface (32) extending from the one end part (31) to a position higher in height than the lower surface of the lid in a state where the cassette with the lid closed is placed on a predetermined position of the placement : mechanism (40),
**characterised in that** the lid opening mechanism (40) includes a jump preventing part (35) formed in an eaves shape in an upper position close to a part where the lower surface of the lid corresponds to the height of the inclined surface (32).

2. The embedding apparatus according to claim 1, wherein the inclined surface is inclined in a front/rear direction parallel to a direction facing the cassette.

3. The embedding apparatus according to claim 1, wherein the inclined surface is inclined in a right/left direction orthogonal to the direction facing the cassette.

4. The embedding apparatus according to claim 3, wherein the placement mechanism includes a groove portion formed with a width in which the cassette is fitted and is capable of moving in the right/left direction.

5. The embedding apparatus according to claim 4, wherein a distance between a wall surface on a side separated from the one end part in the groove portion and the one end part is reduced toward any of the right and left directions.

6. The embedding apparatus according to any one of claims 1 to 5, wherein the lid opening mechanism includes a hand-rest part with an upper surface part having a predetermined size in the front/rear direction and in the right/left direction in an area continued from the other end part on the opposite side to the side facing the cassette.

## Patentansprüche

1. Einbettungsvorrichtung (1), die Folgendes umfasst:
einen Platzierungsmechanismus (40) zum Platzieren einer Kassette (2), die zur Aufnahme einer Gewebeprobe verwendet wird, wobei die Kassette einen Körper (2B) und einen Deckel (2A) aufweist, der bereitgestellt ist, um in Bezug auf den Körper zur Aufnahme einer Probe geöffnet und geschlossen zu werden; und
einen Deckelöffnungsmechanismus (30) zum Öffnen des Deckels der Kassette,
wobei der Deckelöffnungsmechanismus einen Endteil (31), der an einer Position bereitgestellt ist, die in Bezug auf die Höhe niedriger ist als eine untere Oberfläche (2a) des Deckels, und eine geneigte Oberfläche (32) umfasst, die sich von dem einen Endteil (31) zu einer Position erstreckt, die in Bezug auf die Höhe höher ist als die untere Oberfläche des Deckels in einem Zustand, in dem die Kassette mit dem geschlossenen Deckel an einer vorbestimmten Position des Platzierungsmechanismus (40) platziert ist,
**dadurch gekennzeichnet, dass** der Deckelöffnungsmechanismus (40) einen Teil zur Verhinderung des Herausspringens (35) umfasst, der in einer Traufenform in einer oberen Position in der Nähe eines Teils ausgebildet ist, wo die untere Oberfläche des Deckels der Höhe der geneigten Oberfläche (32) entspricht.

2. Einbettungsvorrichtung nach Anspruch 1, wobei die geneigte Oberfläche in eine Vorderseiten-/Rückseitenrichtung parallel zu einer der Kassette zugewandten Richtung geneigt ist.

3. Einbettungsvorrichtung nach Anspruch 1, wobei die geneigte Oberfläche in eine Rechts-/Linksrichtung normal auf die der Kassette zugewandte Richtung geneigt ist.

4. Einbettungsvorrichtung nach Anspruch 3, wobei der Platzierungsmechanismus einen Nutabschnitt umfasst, der mit einer Breite ausgebildet ist, in die die Kassette passt und sich in die Links-/Rechtsrichtung bewegen kann.

5. Einbettungsvorrichtung nach Anspruch 4, wobei ein Abstand zwischen einer Wandoberfläche auf einer Seite getrennt von dem einen Endteil des Nutabschnitts und dem einen Endteil in Richtung einer von Rechts- und Linksrichtung reduziert ist.

6. Einbettungsvorrichtung nach einem der Ansprüche 1 bis 5, wobei der Deckelöffnungsmechanismus einen Handauflageteil mit einem oberen Oberflächenteil, der eine vorbestimmte Größe aufweist, in der Vorderseiten-/Rückseitenrichtung und in der Rechts-/Linksrichtung in einem Bereich umfasst, der sich von dem anderen Endteil auf der entgegengesetzten Seite zu der der Kassette zugewandten Seite fortsetzt.

## Revendications

1. Appareil d'inclusion (1) comprenant :
un mécanisme de positionnement (40) destiné au positionnement d'une cassette (2) utilisée pour recevoir un échantillon de tissu, la cassette ayant un corps (2B) et un couvercle (2A) conçu de manière à être ouvert et fermé par rapport au corps pour recevoir un échantillon ; et
un mécanisme d'ouverture de couvercle (30) pour ouvrir le couvercle de la cassette,
dans lequel le mécanisme d'ouverture de couvercle comprend une première partie d'extrémité (31) prévue au niveau d'une position plus basse qu'une surface inférieure (2A) du couvercle et une surface inclinée (32) s'étendant depuis la première partie d'extrémité (31)jusqu'à une position plus élevée en hauteur que la surface inférieure du couvercle dans un état où la cassette avec le couvercle fermé est positionnée sur une position prédéterminée sur le mécanisme de positionnement (40),
**caractérisé en ce que** le mécanisme d'ouverture de couvercle (40) comprend une partie anti-saut (35) formée sous la forme d'un avant-toit dans une position supérieure proche d'une partie où la surface inférieure du couvercle correspond à la hauteur de la surface inclinée (32).

2. Appareil d'inclusion selon la revendication 1, dans lequel la surface inclinée est inclinée dans une direction avant/arrière parallèle à une direction faisant face à la cassette.

3. Appareil d'inclusion selon la revendication 1, dans lequel la surface inclinée est inclinée dans une direction droite/gauche orthogonale à la direction faisant face à la cassette.

4. Appareil d'inclusion selon la revendication 3, dans lequel le mécanisme de positionnement comprend une partie de rainure formée avec une largeur dans laquelle la cassette est montée et est capable de se déplacer dans la direction droite/gauche.

5. Appareil d'inclusion selon la revendication 4, dans lequel une distance entre une surface de paroi sur un côté séparé de la première partie d'extrémité dans la partie de rainure et la première partie d'extrémité est réduite vers l'une quelconque des directions droite et gauche.

6. Appareil d'inclusion selon l'une quelconque des revendications 1 à 5, dans lequel le mécanisme d'ouverture de couvercle comprend une partie repose-main avec une partie de surface supérieure ayant une taille prédéterminée dans la direction avant/arrière et dans la direction droite/gauche dans une zone continue à partir de l'autre partie d'extrémité sur le côté opposé au côté faisant face à la cassette.
